Europäisches Patentamt

(19) European Patent Office

Office européen des brevets

(11) Publication number: **0 364 131**
**A2**

(12) **EUROPEAN PATENT APPLICATION**

(21) Application number: **89309857.4**

(22) Date of filing: **27.09.89**

(30) Priority: **13.10.88 GB 8824026**

(43) Date of publication of application:
**18.04.90 Bulletin 90/16**

(84) Designated Contracting States:
**DE FR GB IT SE**

(51) Int. Cl.⁵: **B60R 22/06**

(71) Applicant: **JAGUAR CARS LIMITED**
**Browns Lane**
**Allesley Coventry CV5 9DR West**
**Midlands(GB)**

(72) Inventor: **Temple, John**
**The Leys Tamworth Road**
**Fillongley Nr.Coventry Warwicks. CV7**
**8BZ(GB)**
Inventor: **Skidmore, Gerald Peter**
**9 Chaucer Drive Galley Common**
**Nuneaton Warwicks. CV10 9SB(GB)**
Inventor: **Olliver, Richard Trevor**
**33 Clifford Bridge Road Binley**
**Coventry Warwicks. CV3 2DW(GB)**

(74) Representative: **Cundy, Anthony Brian et al**
**Anthony Cundy & Company 384 Station**
**Road Dorridge**
**Solihull West Midlands B93 8ES(GB)**

(54) **Passive seat belts.**

(57) A passive seat belt has a belt (10), one end (11) of which is anchored inboard and rearwardly of the seat (7) at or below the level of the seat (7) and the other end (12) of the belt (10) being anchored inboard and rearwardly of the seat (7) and supported at a height adjacent the top of the seat back (9). One end (12) of the belt (10) is anchored by means of a retractor (16), the belt (10) passing through a running loop (42) attached to a runner (25) which is movable along a track (20) on the outboard side of the seat (7). The track (20) extends from a position forward and above the level of the seat (7), alongside the seat (7) at a level below the level of the vehicle door, to a position rearwardly and at or below the level of the seat (7). A slider (45) engages the belt (10) on both sides of the running loop (42), the belt (10) between the running loop (42) and the end (12) anchored by means of a retractor (16) being free to pass through the slider (45), so that when the runner (25) is disposed at the forward end of the track (20)

the belt (10) will be held clear of the seat (7) and the runner (25) may be moved to the rearward end of the track (20) when lengths of the belt (10) will be held diagonally across the chest and across the lap of the occupant of the seat (7).

FIG 1

## PASSIVE SEAT BELTS

The present invention relates to passive seat belts.

It is known to provide passive seat belts in which one end of the belt is anchored at a fixed point relative to the seat while the other end is attached to a runner which is movable from; a first position forward of the seat where the belt is held clear of the seat and allows the occupant to enter or leave the seat and; a second rearward position in which the belt is held diagonally across the occupant's chest. The runner is arranged to move automatically from the forward position to the rearward position and back, upon completion of certain operations. For example, the runner will move from the forward position to the rearward position upon closing of the doors of the vehicle and switching on the ignition, while it will move from the rearward to the forward position when the ignition is switched off and the vehicle is stationary.

In one known system, the runner travels on a guide track which extends up the A-post of the vehicle along the cantrail (above the door) and part way down at the B-post, to terminate about shoulder level when the occupant is seated. The fixed anchorage is positioned low down rearwardly of the seat, centrally of the vehicle, and has an inertia reel in order to take up the slack in the belt, as the runner moves from the forward to the rearward position.

This system is a two point system providing only diagonal restraint. This two point system may be complemented by a further independent lap belt but hitherto this lap belt has been deployed manually rather than passively. Three point passive systems have been proposed but these have involved guide tracks located in the vehicle doors. This presents problems with regard to providing a secure anchorage point and also opening of the doors when the seat belts are deployed.

The present invention provides a three point passive seat belt system using a single belt in which a track is mounted to the vehicle at a position below door level.

According to one aspect of the present invention, a passive seat belt comprises; a belt, one end of the belt being anchored inboard and rearwardly of the seat at or below the level of the seat, the other end of the belt being anchored inboard and rearwardly of the seat, the belt being supported at or adjacent said other end at a height adjacent the top of the seat back, one end of the belt being anchored by means of a retractor; a guide track extending on the outboard side of the seat from a position forward and above the level of the seat to a position rearward and at or below the level of the seat; a runner slidably mounted in said track, said runner having a running loop through which the belt passes and means being provided to move the runner between the forward and rearward ends of the guide track; characterised in that the track extends alongside the seat at a level below the level of the vehicle door; a slider engaging the belt on both sides of the running loop, the belt between the running loop and the end anchored by means of the retractor being free to pass through the slider.

With a belt according to the present invention, when the runner is positioned at the forward end of the track, the belt will be held in tension by the retractor; so that the length of the belt between said other end and the running loop on the runner will be held clear of the seat; while the length of belt adjacent said one end is held clear of the seat by the slider which is supported on the aforementioned length of belt, so that an occupant can enter or leave the seat. When the runner is moved to the rearward end of the track, the length of belt betwen said one end and the slider is held across the occupant's lap, while the length of belt between said other end and the slider is held diagonally across the occupant's chest.

According to one embodiment of the invention, said other end is anchored by means of the retractor and the slider is fixed with respect to the length of belt between the running loop and said one end of the belt. Alternatively, the slider may be mounted on the length of the belt between the running loop and said one end in a manner which will permit limited movement thereon, means being provided to limit the maximum length of the belt between said one end of the belt and the slider so that during deployment of the belt, that length will be held clear of the occupant of the seat until it is brought down across the lap of the occupant. It will be appreciated that the retractor may be attached to the other end of the belt or retractors may be attached to both ends of the belt.

A flexible resilient support may be provided at said one end of the belt to improve the clearance between the seat and that end of the belt when the runner is in a forward position.

An embodiment of the invention is now described, by way of example only, with reference to the accompanying drawings, in which:-

Figure 1 is an isometric view illustrating a seat belt in accordance with the present invention;

Figure 2 is a side elevation of the seat belt illustrated in Figure 1;

Figures 3 to 6 illustrate various alternative configurations for the guide rail of the seat belt illustrated in Figure 1;

Figure 7 is a side elevation of a docking unit that may be used in the seat belt illustrated in Figure 1; and

Figure 8 is a section along the line VIII-VIII of Figure 7.

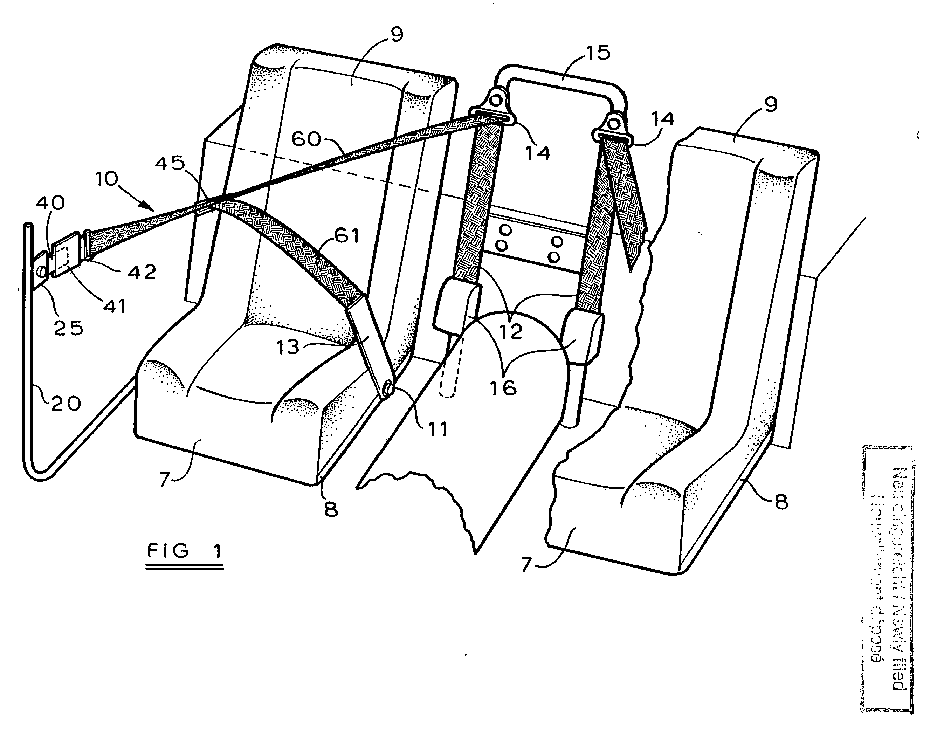

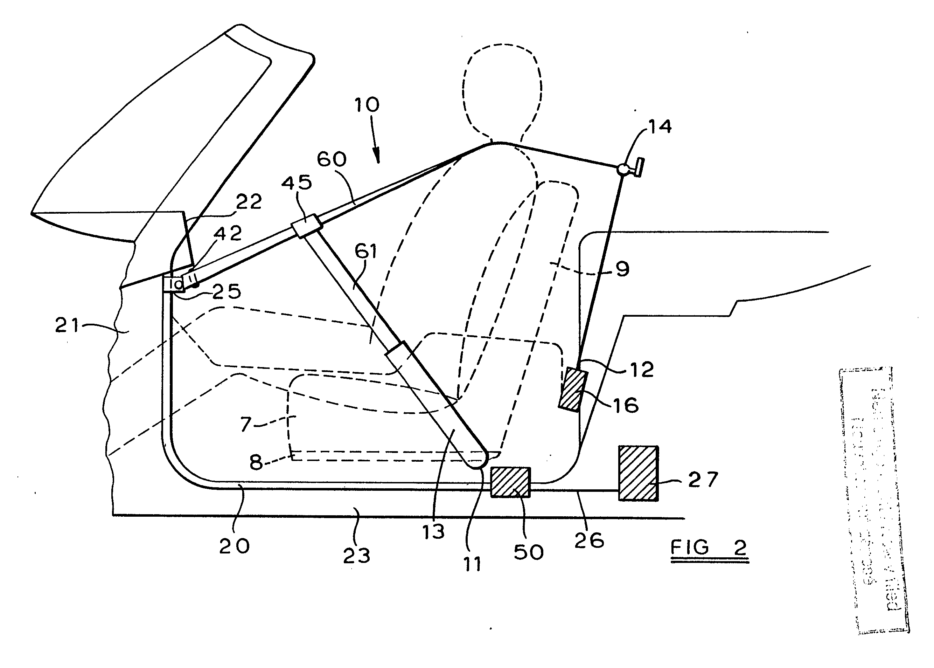

As illustrated in Figures 1 and 2, a passive seat belt for a motor vehicle comprises a belt 10, one end 11 of which is anchored to the seat slide 8 in known manner. A resilient flexible plastic sleeve 13 surrounds the end 11 of the belt 10 and holds this end 11 of the belt 10 clear of the seat 7, when the belt 10 is not deployed. The other end 12 of belt 10 passes through a running loop 14 supported, at about the height of the seat back 9, on a tubular support assembly 15 which is rigidly mounted in the vehicle centrally of the seats 7, the end 12 of belt 10 being anchored to the support assembly 15 by means of a retractor 16.

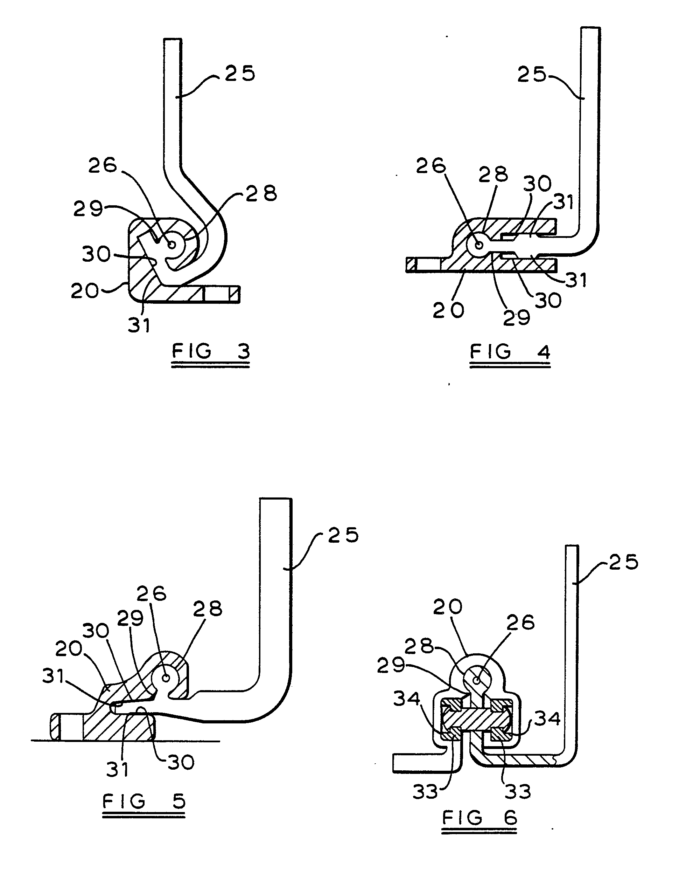

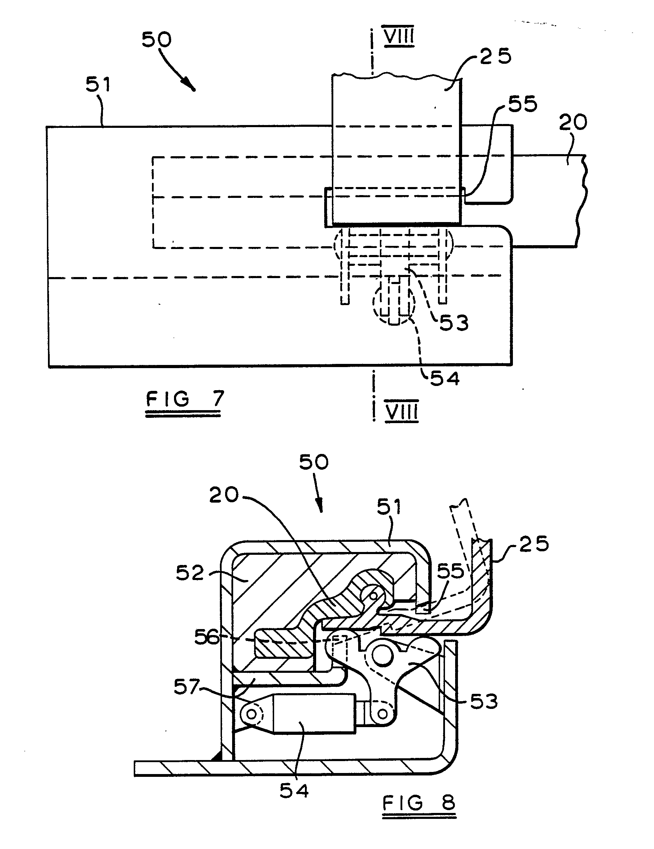

A guide track 20 is fixed to the lower A-post 21 of a vehicle and runs down the A-post 21 from about the level of the dashboard 22, along the sill 23 to a position rearwardly of the seat 7. A runner 25 is slidingly located in the track 20 and is attached to a cable 26 of a motor/winch assembly 27. As illustrated in Figures 3 to 6, the guide track 20 comprises a tubular formation 28 in which the cable 26 is located, the tubular formation 28 having a longitudinal slot 29 in which the runner 25 is located. As illustrated in Figures 3 to 5, the track 20 also has longitudinal faces 30 which engage complementary slide formations 31 on the runner 25. In the embodiment illustrated in Figure 6, rollers 33 on the runner 25 engage in opposed longitudinal grooves 34 in the guide track 20.

The runner 25 has a tongue formation 40 which is releasably engaged by a buckle 41 of known configuration. A running loop 42 is pivotally attached to the buckle 41 and the belt 10 passes through the running loop 42. A slider 45 is attached to the belt 10 on either side of the running loop 42, the length 60 between the running loop 42 and end 12 passing freely through the slider 45, while the length 61 between end 12 and the slider 45 is preset.

A docking unit 50 is provided at the rearward end of the track 20. This docking unit has formations which positively engage complementary formations on the runner 25, when it is located at the rearward end of track 20, in order to locate the runner 25 axially of the track 20 and to withstand tensile loads applied to the belt 10. The docking unit thereby provides a secure anchorage for the runner 25 when the seat belt 10 is deployed.

In the docking unit 50 illustrated in Figures 7 and 8 an outer carrier 51 is adapted to be mounted in the vehicle to provide a secure anchorage. The guide track 20, for example of the form illustrated in Figure 5 is retained in a nylon guide block 52 located within the outer carrier 51. Within the docking unit 50, the portion of track 20 defining the lower longitudinal face 30 is removed. A rocker arm 53 is mounted within the outer carrier 51 so that it will engage the runner 25 when it is located at the rearward end of the track 20. Means, for example a solenoid 54, is provided to swing the rocker arm 53 so that the runner 25 is tilted (as indicated in broken line in Figure 8) and comes into engagement with opposed slots 55 and 56 in the outer carrier 51 and an inner support bracket 57. In this manner the runner 25 is located longitudinally by engagement in the slots 55 and 56 while tensile loads applied to the belt 10 will be reacted against the outer carrier 51 and inner support bracket 57, the runner 25 pivotting about its connecting formation with cable 26 which is located within the tubular portion 28 of the track 20. For release of the belt 10 the solenoid 54 will swing the rocker arm 53 so that the runner 25 is tilted back and disengages from the slots 55 and 56, so that the runner 25 may be moved out of the docking unit 50 and to the forward end of the track 20 by the motor/winch assembly 27.

An electronic control unit, controls the motor/winch assembly 27 to move the runner 25 from the forward end of track 20 to the rearward end and back. This control unit may typically be controlled by signals from the vehicle's speedometer, ignition switch, the courtesy light circuit and a seat switch and also be proximity switches at the forward and rearward ends of the track 20. The control unit may thus control the motor/winch assembly 27 to; move the runner from the forward end of the track 20 to the rearward end thereby deploying the seat belt 10, when the seat is occupied, the doors are shut and the ignition switched on; and move the runner from the rearward end of the track 20 to the forward end, when the ignition is switched off and the vehicle is stationary. Furthermore, a signal from the reverse gear switch may be used to release the belt when reverse gear is selected. The control unit may also control warning means to indicate that the seat belt is being deployed or has been deployed incorrectly.

When the runner 25 is located at the forward end of track 20, the length 60 of belt 10 is held under tension by retractor 16 and length 61 is held clear of seat 7 by the plastic sleeve 13 and the slider 45 which is supported by length 60. This enables an occupant to enter or leave the seat 7. As the runner 25 is moved to the rearward end of the track 20 and into engagement with the docking unit 50, length 60 of belt 10 is moved diagonally across the chest of the occupant, while length 61 comes down across the lap of the occupant. As the runner 25 moves from the forward to the rearward end of the track 20, slack in lengths 60 and 61 of the belt 10 is taken up by the retractor 16. The retractor 16 may be of the mechanical, inertia reel type or alternatively may be motorised, working in synchronisation with the motor/winch assembly 27. In an emergency the belt 10 may be removed by releasing the buckle 41 to detach the belt 10 from the runner 25. Suitable interlock means may be provided to ensure that release of the buckle 41 is only possible in an emergency, in order to prevent misuse of the seat belt.

In order to accommodate forward/rearward adjustment of the seat 7, the end 11 of the belt 10 is fixed to the seat slide 8 and will thus move with the seat 7, while the docking unit 50 and anchorage point of end 12 of the belt may be positioned rearwardly of the rearmost position of the seat 7. Alternatively, the docking unit 50 may be mounted on a slide mounted parallel with the seat and adjustable to one of several positions in which it may be locked. The height of the running loop 14 may also be adjustable in similar manner.

According to alternative embodiments of the invention, the end 12 of belt 10 may be attached directly to an anchor point adjacent the height of the seat back 9 or may be incorporated into the back 9 of a safety seat. While it is convenient to anchor the end 11 of belt 10 to the seat slide 8, this end 11 may alternatively be anchored to a fixed point rearwardly of the most rearward position of the seat 7.

The seat belt system according to the present invention, in addition to providing an improved passive system suitable for any vehicle, is particularly suitable for convertible vehicles as the guide track is supported along the sill.

Various modifications may be made without departing from the invention. While in the above embodiment the guide track is supported along the sill of the vehicle, it may be supported alongside the seat at a level below the door level, in any suitable manner, for example the track may be secured to the floor of the vehicle.

**Claims**

1. A passive seat belt comprising; a belt (10), one end (11) of the belt being anchored inboard and rearwardly of the seat (7) at or below the level of the seat (7), the other end (12) of the belt (10) being anchored inboard and rearwardly of the seat (7), the belt (10) being supported at or adjacent said other end (12) at a height adjacent the top of the seat back (9), one end (12) of the belt (10) being anchored by means of a retractor (16); a guide track (20) extending on the outboard side of the seat (7) from a position forward and above the level of the seat (7) to a position rearward and at or below the level of the seat (7); a runner (25) slidably mounted in said track (20), said runner (25) having a running loop (42) through which the belt (10) passes and means (27) being provided to move the runner (25) between the forward and rearward ends of the guide track (20); characterised in that the track (20) extends alongside the seat (7) at a level below the level of the vehicle door and a slider (45) engages the belt (10) on both sides of the running loop (42), the belt (10) between the running loop (42) and the end (12) anchored by means of the retractor (16) being free to pass through the slider (45).

2. A passive seat belt according to Claim 1 characterised in that the guide track (20) is mounted down the A-post (21) and along the sill (23) of a motor vehicle.

3. A passive seat belt according to Claim 2 characterised in that the guide track (20) terminates at its forward end at a level adjacent the level of the dashboard (22) of the vehicle.

4. A passive seat belt according to any one of Claims 1 to 3 characterised in that the runner (25) is moved between the forward and rearward ends of the guide track (20) by means of an electric motor/winch assembly (27), the runner (25) being attached to the winch cable (26).

5. A passive seat belt according to Claim 4 characterised in that the guide track (20) defines a tubular formation (28) in which the cable (26) is located, the runner (25) extending through a longitudinal slot (29).

6. A passive seat belt according to any one of the preceding claims characterised in that a docking unit (50) is provided at the rearward end of the guide track (20) in order to provide a secure anchorage for the runner (25) when it is at that end of the guide track (20).

7. A passive seat belt according to any one of the preceding claims characterised in that said one end (11) of the belt (10) is anchored to the seat slide (8).

8. A passive seat belt according to any one of the preceding claims characterised in that a flexible resilient support (13) is provided at said one end (11) of the belt (10) in order to support that end (11) of the belt (10) clear of the seat (7) when the runner (25) is at the forward end of the guide track (20).

9. A passive seat belt according to Claim 8 characterised in that a resilient plastic sheath (13) surrounds the belt (10) adjacent said one end (11).

10. A passive seat belt according to any one of the preceding claims characterised in that said other end (12) of the belt (10) passes through a running loop (14), supported adjacent the level of the seat back (9), and is anchored by means of a retractor (16).

11. A passive seat belt according to any one of the preceding claims characterised in that the retractor (16) is of the mechanical inertia reel type.

12. A passive seat belt according to any one of Claims 1 to 10 characterised in that the retractor (16) is motorised and is driven in synchronisation with movement of the runner (25).

13. A passive seat belt according to any one of the preceding claims characterised in that the slider (45) is fixed with respect to the length of belt (10) adjacent the end (11) remote from said retractor (16).

14. A passive seat belt according to any one of Claims 1 to 12 characterised in that the slider (45) is mounted on the length of belt (10) adjacent the end (11) remote from said retractor (16) in a manner which will permit limited movement thereon, means being provided to limit the length of the belt (10) between the slider (45) and said one end (11) to a preset maximum.

15. A passive seat belt according to any one of the preceding claims characterised in that a docking unit (50) is provided at the rearward end of the guide track (20), said docking unit (50) including formations (55, 56) which positively engage complementary formations on the runner (25), when the runner (25) is located at the rearward end of the guide track (20), in order to locate the runner (25) longitudinally and withstand any tensile loads applied to the belt (10).

16. A passive seat belt according to Claim 15 characterised in that the docking unit (50) includes means (53, 54) for engaging or disengaging the formations on the runner (25) from those of the docking unit (50).

17. A passive seat belt according to any one of the preceding claims characterised in that the running loop (42) is attached to the runner (25) by means of a releasable buckle (41).

FIG 1

FIG 2

EP 0 364 131 A2

FIG 3

FIG 4

FIG 5

FIG 6

FIG 7

FIG 8